# FASCICULE DE BREVET EUROPEEN

(11) **EP 2 573 888 B1**
(45) Date de publication et mention de la délivrance du brevet: **08.07.2015**
(21) Numéro de dépôt: 12183150.7
(22) Date de dépôt: 05.09.2012
(51) Int. Cl.: H02G 3/04, H02G 3/32

(54) **Clip pour chemin de câbles**
Clip für Kabelpritsche
Clip for cable trough

(30) Priorité: 22.09.2011 FR 1158450
(43) Date de publication de la demande: 27.03.2013
(73) Titulaire: Amphenol Air LB, 08110 Blagny (FR)
(72) Inventeur: Miquet, Pascal, 08140 Pouru-Saint-Remy (FR)
(74) Mandataire: Delprat, Olivier

(56) Documents cités:
- EP-A2- 2 360 801
- DE-A1-102004 045 964
- US-A1- 2008 134 477

## Description

L'invention a pour objet les dispositifs de maintien de câbles à l'intérieur et au fond d'un chemin de câbles, en particulier à l'intérieur d'un chemin de câbles d'un avion.

Le document EP 2 360 801 décrit un dispositif selon le preambule de la revendication 1.

Les chemins de câbles sont des profils extrudés comportant un ou plusieurs rails formant goulottes. A l'intérieur des goulottes, sont placés des groupes de câbles, qu'il est d'une part nécessaire de maintenir à l'intérieur du chemin de câbles, et pour lesquels on a besoin de points d'arrimage pour attacher les câbles qui quittent le chemin de câbles à un endroit donné.

En général, le maintien des câbles à l'intérieur du chemin de câbles est assuré par au moins une pièce spécifique, et l'arrimage des câbles à l'endroit où ceux-ci sont extraits du chemin de câbles est assuré à l'aide d'un dispositif séparé.

Les deux types de dispositifs sont décrits par exemple dans la demande de brevet US 2008 134 477 qui décrit une première pièce formant bague de rétention, ceinturant le chemin de câbles de manière à retenir les câbles à l'intérieur et au fond, et qui décrit également un système d'arrimage des câbles sortants. A l'aide de deux plaques de serrage autobloquantes coulissant l'une derrière l'autre le long d'une bande de rétention munie de dents anti-retour d'un harpon, un câble sortant peut être "ancré" sur une perforation ménagée dans le fond du chemin de câbles.

Ainsi, pour un chemin de câbles comprenant quatre goulottes, dont on souhaiterait extraire au moins un câble de chaque goulotte, est-on amené à poser la pièce formant bague de rétention, ainsi que quatre dispositifs à harpon. Les dispositifs à harpons doivent être impérativement posés à un endroit disposant des perforations adéquates du fond du chemin de câbles.

Un tel dispositif de fixation nécessite au moins quatre types de pièces distinctes, soit la bague de rétention, les tiges à harpons et les plaques inférieure et supérieure d'arrimage des câbles. La bague de rétention présente elle-même une géométrie complexe, avec de nombreuses zones en contre-dépouille, nécessitant des outillages d'injection plastique coûteux.

L'invention a pour objet de proposer un système de fixation permettant d'assurer à la fois la rétention des câbles à l'intérieur d'un chemin de câbles, et pouvant en même temps servir de support d'arrimage aux câbles qui doivent être extraits du chemin de câbles. L'invention a également pour but de minimiser le nombre de pièces nécessaires à l'arrimage et à l'extraction des câbles, en proposant à cet effet une pièce qui peut être obtenue par injection dans un moule de construction relativement simple, c'est-à-dire ne comportant au plus qu'un nombre limité de tiroirs.

A cet effet, un dispositif de maintien est apte à être clipsé par dessus un chemin de câbles à un ou à plusieurs rails plans parallèles, le chemin de câbles étant bordé par deux faces planes latérales parallèles de deux rails latéraux et par un fond de goulotte reliant les rails et les faces planes perpendiculairement à celles-ci, et comporte :
- une armature transversale apte à être disposée transversalement par-dessus les extrémités opposées au fond de goulotte, des rails,
- au moins deux pattes de clipsage parallèles, dont une patte à chaque extrémité de l'armature, sensiblement perpendiculaire à l'armature et comportant un ergot de rétention formant une protubérance en direction de l'ergot de l'autre patte. Chaque ergot est apte à s'insérer en appui sous le fond de goulotte, de manière à retenir le dispositif de maintien sur le chemin de câble, l'ergot étant apte à être dégagé du fond de goulotte par déformation élastique de la patte,
- au moins une languette de maintien s'étendant en position assemblée du dispositif, de l'armature vers le fond de goulotte.

L'armature transversale comprend deux barres transversales reliant chacune les deux pattes de clipsage, les deux barres étant reliées entre elles par au moins deux barreaux disjoints l'un de l'autre, dont un barreau d'attache et un barreau de renfort, le barreau de renfort se trouvant à côté du barreau d'attache le long des barres transversales. On entend par là que le barreau d'attache se trouve séparé par un espace du barreau de renfort, sans troisième barreau entre le barreau d'attache et le barreau de renfort.

On désigne par direction transversale, la direction selon laquelle s'étendent les deux barres transversales, et par direction longitudinale la direction orthogonale à la direction précédente, c'est-à-dire la direction parallèle aux rails et à la direction d'extrusion du chemin de câble.

On appelle par la suite profil concave d'un élément suivant la direction longitudinale (par exemple *̅x̅*̅), un profil qui dans un plan de coupe perpendiculaire à la direction transversale perpendiculaire (par exemple *̅y̅*̅), est limité par un profil concave par rapport à l'élément, c'est-à-dire "en creux" par rapport à l'élément (par exemple le barreau). On appelle de même profil concave d'un élément suivant la direction transversale (par exemple *̅y̅*̅), un profil qui dans un plan de coupe perpendiculaire à la direction longitudinale perpendiculaire (par exemple *̅x̅*̅) est limité par un profil concave par rapport à l'élément, c'est-à-dire "en creux" par rapport à l'élément.

Le barreau d'attache peut présenter un premier profil concave selon sa direction longitudinale, qui coïncide avec la direction longitudinale des rails quand le dispositif de maintien est assemblé sur le chemin de câbles, la concavité du premier profil étant tournée vers le fond de goulotte en position de montage. Le barreau de renfort se trouve de préférence à une hauteur par rapport au fond de goulotte strictement inférieure à la hauteur maximale du premier profil concave.

La distance ou hauteur par rapport au fond de la goulotte peut être mesurée par rapport à un fond de goulotte de référence, qui est une portion de plan géométrique parallèle à un plan défini par les deux barres transversale, et tangente à deux surfaces d'appui de clipsage des deux ergots.

Avantageusement, la plus grande dimension de chaque languette s'étend dans une direction qui est perpendiculaire à la direction transversale, et qui est oblique par rapport à la direction longitudinale, et la plus petite dimension des languettes est parallèle à la direction transversale. Les languettes s'étendant de préférence d'un même côté que les deux pattes par rapport à un plan défini par les deux barres transversales. Chaque languette peut être de largeur sensiblement égale à l'intervalle séparant deux rails entre lesquels la languette est insérée. L'épaisseur des languettes est choisie de manière à ce que, compte tenu de la rigidité du matériau utilisé pour réaliser le dispositif de maintien, chaque languette vienne s'insérer dans l'intervalle entre deux rails et exercer une pression de maintien sur les câbles éventuellement présents à l'intérieur du rail.

Selon un mode de réalisation préféré, le barreau de renfort est rectiligne. Avantageusement, la section à mi-longueur, suivant un plan transversal, du barreau de renfort, peut être supérieure en surface à la section à mi longueur du barreau d'attache. Cette configuration permet de dégager davantage d'espace sous les barreaux d'attache pour faciliter un éventuel arrimage de câbles, tout en préservant la rigidité globale du dispositif.

De manière préférentielle, le barreau d'attache présente un premier profil concave suivant la direction longitudinale sur une face inférieure, et présente un second profil concave suivant la direction transversale sur une face supérieure, qui est tourné à l'opposée du chemin de câbles en position de montage.

Selon un mode de réalisation avantageux, le barreau d'attache présente une ligne moyenne longitudinale qui est une ligne brisée en trois segments de droites, dont deux segments formant un angle compris entre 30° et 60° par rapport au plan défini par les deux lignes moyennes des deux barres transversales.

Les deux barres de l'armature transversale peuvent être reliées uniquement par une succession de barreaux, et par les deux pattes de clipsage.

Selon un mode de réalisation, un ergot interfère selon la direction transversale avec au moins un barreau. Les deux barres peuvent être reliées par une succession de barreaux, un barreau d'attache alternant avec un barreau de renfort.

Le dispositif peut comporter un nombre pair de languettes de maintien, s'étendant de part et d'autre de l'armature, avec des paires de languettes de même largeur se faisant face de part et d'autre de l'armature.

Avantageusement, les barreaux d'attache sont sensiblement perpendiculaires aux barres, sont de largeur inférieure ou égale à la largeur des languettes de maintien, et sont chacun sensiblement centré par rapport à une languette de maintien.

Selon un mode de réalisation préféré, le dispositif comporte un nombre 4n multiple de quatre de languettes de maintien, et le nombre de barreaux concaves est égal à n.

Chaque patte de clipsage peut comprendre un arceau dont chaque extrémité est solidaire respectivement d'une extrémité de barre transversale, et dont une portion de sommet de l'arceau porte latéralement l'ergot de rétention, faisant saillie en direction de l'autre ergot.

Selon un autre aspect, dans un procédé de fabrication par injection thermoplastique d'un dispositif de maintien pour chemin de câbles, on utilise un moule d'injection formé d'une partie fixe et d'une partie mobile, chaque partie portant une empreinte définissant au moins une face de chacun des éléments suivants :
- deux barres transversales parallèles,
- des barreaux reliant les deux barres transversales à différentes hauteurs par rapport au plan défini par les deux barres transversales,
- des languettes s'étendant de part et d'autre des deux barres transversales,
- deux pattes de clipsage reliant chacune l'extrémité d'une barre transversale à l'extrémité voisine de l'autre barre transversale.

Une des parties du moule étant munie de deux tiroirs coulissant suivant une direction sensiblement parallèle aux barres transversales, et aptes à dépasser de cette partie de moule à l'intérieur de l'empreinte de deux pattes.

D'autres buts, caractéristiques et avantages de l'invention apparaîtront à la lecture de la description suivante, donnée uniquement à titre d'exemple nullement limitatif, et faite en référence aux dessins annexés sur lesquels :
- la figure 1 est une vue en perspective montrant deux clips ou systèmes de maintien selon l'invention, assemblés sur un chemin de câbles en l'absence de câble,
- la figure 2 est une vue en perspective d'un système de maintien selon l'invention avant son montage sur le chemin de câbles,
- la figure 3 est une vue en coupe longitudinale du système de maintien représentés sur les figures 1 et 2,
- la figure 4 est une vue en coupe transversale du système de maintien de la figure 3.

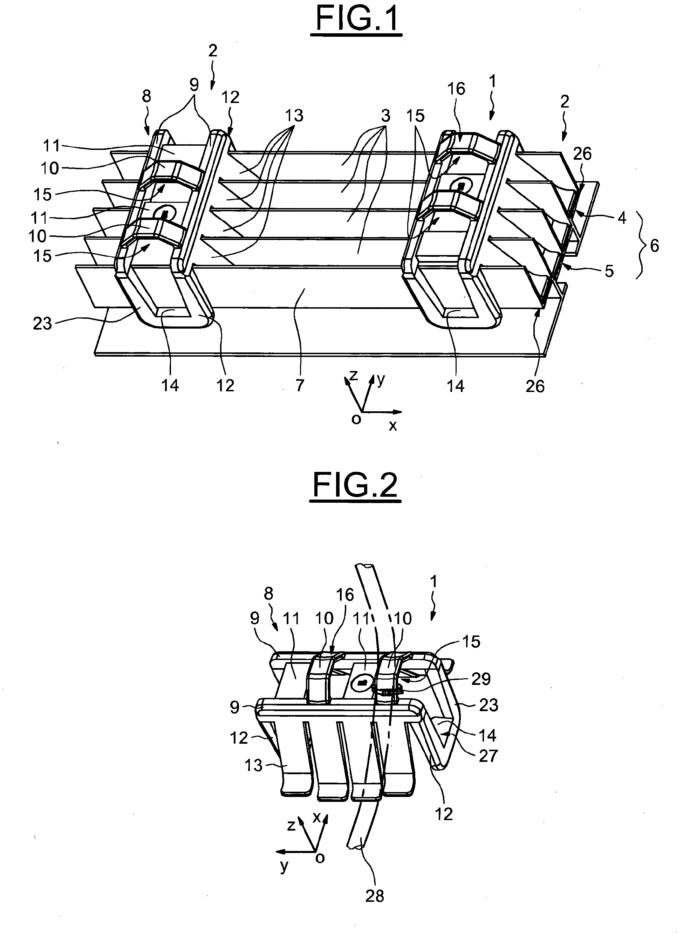

Tel qu'illustré sur la figure 1, plusieurs dispositifs de maintien, aussi appelés clips, sont assemblés sur un chemin de câbles 2. Le chemin de câbles 2 comporte plusieurs rails 3 représentés par des faces planes verticales sur la figure, ces rails étant reliés par un fond de goulotte 6. Le fond de goulotte 6 comprend des zones latérales planes 4 perpendiculaires aux rails et comprend une zone centrale 5 parallèle aux zones latérales 4, légèrement décalée suivant la position verticale de la figure par rapport aux parties latérales 4. Un épaulement 26 court le long des faces extérieures 7 des deux rails 3 d'extrémité bordant le chemin de câbles, offrant une zone longitudinale d'appui formant un décrochement par rapport aux faces 7, en direction du centre du chemin de câbles. Le clip pourrait être assemblé sur tout système de câbles présentant le même nombre de rails et présentant un fond de goulotte associé à au moins un épaulement 26 situé à la même distance de l'extrémité supérieure des rails.

Dans toute la suite de la description, on désigne par direction longitudinale, la direction parallèle à l'axe *Ox̅* représenté sur la figure 1 et qui est à la fois la direction longitudinale des câbles -une fois ceux-ci disposés dans un chemin de câbles-, et la direction associée sur le clip 1 lorsque celui-ci est en position de montage sur le chemin de câbles 2.

On désigne par direction transversale, la direction parallèle à l'axe *Oy̅.* Cette direction est perpendiculaire à la direction longitudinale et est parallèle au fond de goulotte 6.

On désigne par direction "verticale" *̅z̅*̅ -car cette direction est verticale sur l'exemple illustré à la figure 1- mais pourrait être autre en fonction de la disposition du chemin de câbles ou du clip, la direction perpendiculaire à la direction longitudinale *̅x̅*̅, à la direction transversale *̅y̅*̅, et pointant du fond de goulotte vers les extrémités libres des rails définissant le chemin de câbles.

Les directions *̅x̅*̅, *̅y̅*̅ et *̅z̅*̅ désignent également les directions correspondantes du clip, associées au clip lorsque celui-ci est en position de montage sur le chemin de câbles, mais qui peuvent désigner les mêmes directions du clip isolé du chemin de câbles. Chaque clip 1 comprend une armature transversale 8 disposée par-dessus les extrémités libres des rails 3, et constituée de deux barres transversales 9 de même longueur, disposées par-dessus les rails 3 perpendiculairement à ceux-ci, et reliées par une série de barreaux 10 et 11 s'étendant suivant la direction longitudinale *Ox̅*.

L'armature transversale 8 se termine par deux pattes de clipsage 12 sensiblement perpendiculaires à l'armature, et s'étendant verticalement entre l'extrémité libre d'un rail d'extrémité sur lequel s'appuie l'armature, et l'épaulement 26.

Plus précisément, la patte 12 s'étend verticalement jusqu'à descendre un peu en dessous des épaulements 26. La partie de la patte qui dépasse sous l'épaulement 26 porte un ergot 14 qui vient en appui vertical contre l'épaulement 26, de manière à maintenir le clip 1 sur le chemin de câbles 2.

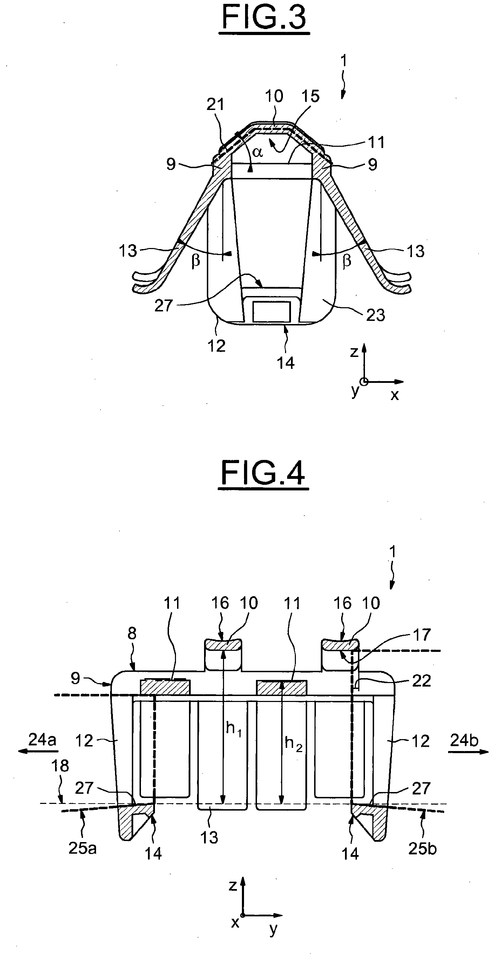

A partir de chaque barre transversale 9, des languettes de maintien 13 s'étendent en oblique en direction du fond de goulotte 6. Une première nappe s'étend à partir de la première barre, et une seconde nappe s'étend à partir de la seconde barre, formant deux nappes symétriques de part et d'autre de l'armature 8. Chacune des nappes forme un angle ß (visible sur la figure 3) avec la direction *Oz̅*, sensiblement compris entre 20° et 60°, et de préférence compris entre 30° et 45°.

Lorsque le fond d'au moins une goulotte se trouve à une hauteur différente par rapport au fond d'une autre goulotte, les languettes 13 du clip associé peuvent présenter des longueurs différentes, de manière à ce qu'en position de montage, l'appui de chaque languette sur les câbles présents (non représentés sur la figure 1) à l'intérieur de la goulotte, exerce une force comparable.

Le clip 1 est réalisé par injection dans une matière plastique déformable, par exemple dans un polyamide avec peu ou pas de charges de renfort. Le dimensionnement doit cependant tenir compte de la souplesse nécessaire pour pouvoir déformer les pattes du clipsage 12 lors de la mise en place du clip.

Les barreaux 10 et 11 assurent la rigidité de l'armature 8 par rapport à des sollicitations de flexion qui tendraient à faire pivoter le clip 1 autour de l'axe transversal *Oy̅*, ce qui risquerait de désengager les ergots 14 de dessous les épaulements 26. Un premier groupe de barreaux 11 est constitué de barreaux rectilignes présentant une forme parallélépipédique s'étendant parallèlement à l'axe *Ox̅*. d'une barre transversale 9 à l'autre barre transversale.

Sur l'exemple de la figure 1, certaines des surfaces planes supérieures de ces barreaux 11 sont utilisées à des fins de marquage, par exemple en y inscrivant un dateur, le nom du fabricant ou la nature du plastique utilisé.

Ce premier groupe de barreaux 11 s'étend à une hauteur (par rapport à l'axe *̅z̅*̅) sensiblement égale à la hauteur des deux barres transversales 9, ou s'étend à une hauteur légèrement inférieure à la hauteur maximale de ces barres transversales 9.

Un second groupe de barreaux forme des barreaux-pontets 10 joignant les deux barres transversales 9, en formant des arches dont la face inférieure est plus élevée que la hauteur maximale de chaque barre 9 transversale. Ces seconds barreaux 10 présentent une double concavité : un premier profil concave 15 tourné vers le bas, c'est-à-dire dans la direction commune pointée par les extrémités des pattes 12. Cette concavité est perceptible sur la face inférieure des barreaux sur une coupe longitudinale (dans un plan (O,*̅x̅*̅,*̅z̅*̅) du barreau 10, comme par exemple sur la figure 3. Les barreaux 10 présentent également un second profil concave 16, cette fois-ci visible sur leur face supérieure (supérieure par rapport à la direction de l'axe *̅z̅*̅), sur une coupe longitudinale du barreau, comme par exemple sur la figure 4. Le premier profil concave 15 permet de venir passer une extrémité d'une boucle d'une attache autobloquante de type "Colson" pour venir attacher aux barreaux, un câble ou un groupe de câbles, qui est extrait en oblique du chemin de câbles sensiblement face au barreau 10. l'attache peut alors être insérée en passant par-dessus un barreau voisin 11 du barreau 10, sous le premier profil concave 15, et par-dessus un second barreau voisin 11 si le barreau 10 est bordé par un second barreau rectiligne 10. Selon une variante de réalisation non représentée sur les figures, l'attache pourrait être insérée également par-dessus un barreau voisin concave 10 si par exemple deux barreaux voisins étaient du type concave, et sortir par dessus un barreau rectiligne 11 ou à l'extrémité du clip. Il suffirait pour cela que les deux barreaux concaves soient légèrement espacés.

Pour faciliter l'insertion de l'attache, les barreaux concaves 10 alternent avec des barreaux droits 11. Le dénivelé entre les deux types de barreaux facilite ainsi la mise en place de l'attache autour du barreau concave 10.

Afin que les câbles de chaque goulotte disposent de barreaux d'attache situés à une position transversale idoine, un barreau concave est disposé en alternance avec un barreau droit, sensiblement au centre de la largeur transversale de chaque goulotte du chemin de câbles Autrement dit, chaque barreau 10 ou 11 est sensiblement centré sur une des languettes 13 de maintien.

Si le chemin de câbles comporte un nombre pair de goulottes, comme illustré sur la figure 1, quelle que soit la goulotte dont on souhaite sortir un câble, on peut disposer un barreau concave face à cette goulotte, soit dans une première position du clip tel qu'illustré sur la gauche de la figure 1, soit dans une seconde position du clip en retournant celui-ci de 180° autour de l'axe *̅z̅*̅, tel qu'illustré sur la partie droite de la figure 1.

On assure ainsi avec une seule géométrie de pièce, le maintien des câbles à l'intérieur et au fond du chemin de câbles 2, plaqués de manière élastique contre le fond du chemin de câbles et on assure la fonction de support d'attache des câbles sortants, quelle que soit le rail du chemin de câbles dont on extrait le câble. La concavité supérieure des barreaux concaves 10 permet de maintenir le câble sortant centré sur le barreau 10 auquel il est attaché. Afin de permettre d'attacher aussi bien un câble arrivant dans le sens des *̅x̅*̅ positifs qu'arrivant dans le sens des *̅x̅*̅ négatifs (direction parallèle et de sens opposée à l'axe *̅x̅*̅), le barreau 10 présente une section longitudinale (dans le plan (*O*,*̅x̅*̅,*̅z̅*̅)) en ligne brisée, par exemple une ligne brisée en trois parties avec deux pentes latérales α symétriques par rapport à l'horizontale, correspondant à l'angle sous lequel on extrait le câble du chemin de câbles. Cet angle α entre les zones latérales du barreau et un plan défini par le sommet des deux barres, est de préférence modéré, par exemple compris entre 30° et 60°.

Le barreau 10 présente également une portion rectiligne supérieure parallèle à l'axe *Ox̅*. Chacune des trois portions rectilignes latérale ou centrale, est concave en face supérieure suivant l'axe *Oy̅,* c'est à dire vue en coupe suivant le plan (*O*,*̅y̅*̅,*z̅).* Cette concavité permet d'attacher et de centrer un câble à l'une quelconque des trois portions. On peut donc, le cas échéant, attacher un câble de manière à ce qu'il sorte sensiblement à l'horizontale du chemin de câbles.

La largeur des barreaux concaves 10 peut être légèrement inférieure à la largeur des barreaux de renfort rectilignes 11, de manière à faciliter les manipulations d'insertion des attaches autobloquantes, en augmentant l'espace disponible entre deux barreaux concaves successifs.

La figure 2 est une vue en perspective d'un des clips 1 de la figure 1, isolé du chemin de câbles 2. On retrouve sur la figure 2 des références communes à la figure 1, les mêmes éléments étant désignés par les mêmes références. On distingue notamment sur la figure 2 l'ergot 14 qui dépasse à l'intérieur des pattes 12 afin de venir se glisser sous l'épaulement 26 de la figure 1. On distingue également sur la figure 2, un câble 28 en position d'extraction du chemin de câbles, et attaché à l'un des barreaux concaves 10 par une attache autobloquante 29. L'ergot 14 est limité suivant l'axe *̅z̅*̅ par une face d'appui de clipsage 27 sensiblement parallèle à un plan défini par les deux barres transversales 9. La face d'appui de clipsage 27 s'étend selon la direction transversale *̅y̅*̅ au-delà de la patte de clipsage 12 qui le porte, en direction de l'autre patte de clipsage 12. La portion de la face d'appui'qui dépasse de la patte peut ainsi être insérée sous le fond d'un chemin de câbles.

Les figures 3 et 4 sont des vues en coupe, respectivement dans un plan (O,*̅x̅*̅,*̅z̅*̅) et dans un plan (*O*,*̅y̅*̅,*̅z̅*̅), du clip 1 de la figure 1, les éléments communs aux figures 1 et 2 étant désignés par les mêmes références. On distingue notamment sur la figure 3 le profil moyen 21 en ligne brisée des barreaux concaves 10. On note également que la hauteur maximale h₁ du sommet 17 du bord inférieur des barreaux concaves 10, est strictement supérieure à la hauteur h₂ du bord supérieur des barreaux rectilignes 11. La hauteur est ici la distance selon l'axe vertical *̅z̅*̅, mesurée par rapport à un fond de goulotte virtuel 18 qui est un plan apte à venir en appui simultanément sur les deux surfaces d'appui de clipsage 27 des deux ergots 14.

On a repéré sur cette figure par un angle α, l'angle des portions latérales des barreaux 10 concaves par rapport à l'horizontale. On a également repéré sur cette figure par un angle β l'angle que forment les pattes de clipsage 12 avec l'axe vertical *Oz̅*.

On observe sur les figures 2 et 3 que la patte de clipsage 12 forme un arceau s'étendant entre les deux barres transversales 9. Le sommet de cet arceau, qui se trouve en partie inférieure -par rapport à l'axe *Oz̅*- sur la figure 3, porte l'ergot 14.

La face d'appui 27 de l'ergot 14 est une surface plane s'étendant sous l'arceau et se prolongeant à l'extérieur de l'arceau selon la direction transversale *̅y̅*̅. La partie débordant de l'arceau présente une largeur selon *̅x̅*̅ inférieure ou égale à la largeur de la partie sous l'arceau.

La face d'appui 27 de l'ergot 14 peut ainsi être obtenue, lors du moulage du clip 1, à l'aide d'un tiroir 25a (respectivement 25b) (schématisé par des pointillés 25a, resp.25b sur la figure 4), le tiroir passant à l'intérieur de l'arceau 12, et étant mobile suivant une direction 24a (respectivement 24b) sensiblement parallèle à l'axe *̅y̅*̅.

En effet, pour obtenir un maintien satisfaisant du clip 1 sur le chemin de câbles 2, la longueur suivant l'axe *Ox̅* de la surface d'appui 27 des deux ergots 14 doit parfois être telle que cette surface vient interférer en projection selon l'axe O*̅z̅*̅, avec l'un des barreaux 10 ou 11. La longueur d'interférence a été notée 22 sur la figure 4.

Si l'interférence 22 peut être réduite à zéro, par exemple en déplaçant les barreaux 10 et 11 extrémaux vers le centre du clip, et/ou en réduisant la profondeur selon *̅x̅*̅ de la surface d'appui 27, la forme du clip est suffisamment simple pour que celui-ci puisse être réalisé par injection dans un moule sans mécanisation spéciale, c'est-à-dire sans tiroir mobile à l'intérieur de l'empreinte du moule.

Si cependant l'interférence 22 est souhaitable, la complexité du moule d'injection associé reste modérée, puisqu'il suffit de deux tiroirs latéraux mobiles sensiblement suivant l'axe *Oy̅* pour permettre de réaliser un ergot de longueur satisfaisante.

L'invention ne se limite pas aux exemples de réalisation décrits et peut se décliner en de nombreuses variantes, notamment en ce qui concerne la courbure supérieure des barreaux concaves 10, qui est fonction des câbles que l'on souhaite attacher, en ce qui concerne l'alternance des barreaux concaves et des barreaux droits. Dans le cas où l'on souhaite adapter ce clip à un chemin de câbles ayant un nombre impair de goulottes, on peut éventuellement prévoir deux clips distincts pour permettre d'extraire des câbles soit au niveau des goulottes d'ordre pair, soit au niveau des goulottes d'ordre impair.

On peut également envisager des positions des barreaux concaves dont la périodicité est différente de la périodicité spatiale d'espacement des goulottes.

Les barreaux de renfort 11 pourraient être également concaves dans le sens longitudinal, c'est à dire dans un plan (O,x,z), la concavité étant en face supérieure et tournée vers l'extérieur du chemin de câbles, de manière à ménager un accès encore plus aisé lors du positionnement des attaches autobloquantes. Les languettes de maintien pourraient avoir une forme autre que celle décrite, par exemple comporter une nervure suivant leur longueur afin d'augmenter leur rigidité. La face inférieure concave des barreaux 10 pourrait comporter des reliefs destinés à limiter le déplacement des attaches autobloquantes d'un bout à l'autre de l'arceau, par exemple des reliefs positionnés en face inférieure au niveau des points de raccord de la ligne brisée 21. On peut envisager de relier les barres transversales par uniquement par des barreaux rectilignes, placés à différentes hauteurs afin de permettre le passage d'une attache autobloquante.

Des combinaisons de géométrie spécifiques peuvent être prévues sur le clip et sur le chemin de câbles pour limiter un glissement du clip le long du chemin de câbles. On peut par exemple prévoir des reliefs à intervalles périodiques ménagés sur les faces extérieures 7 du chemin de câbles, et aptes à venir se loger dans l'ouverture définie par l'arceau des pattes 12. On peut prévoir des encoches périodiques sur les bords supérieurs des faces 7, dans lesquelles viendrait se loger un ergot vertical ménagé entre une des pattes 12 et sa languette de maintien voisine, à la base de celles-ci.

De manière générale, le clip d'assemblage selon l'invention permet de limiter le nombre de pièces, et de références à gérer, pour l'assemblage de câbles dans le chemin de câbles. Ce clip permet d'assurer plusieurs fonctions à la fois avec une pièce relativement simple à fabriquer et très légère par rapport au nombre de fonctionnalités assurées.

## Revendications

1. Dispositif (1) de maintien, apte à être clipsé par dessus un chemin de câbles (2) à un ou à plusieurs rails (3) plans parallèles, le chemin de câbles (2) étant bordé par deux faces planes latérales (7) parallèles limitant deux rails latéraux et étant bordé par un fond de goulotte (6) reliant les rails (3) et reliant les faces planes perpendiculairement à celles-ci, le dispositif de maintien comportant :
- une armature transversale (8) apte à être disposée transversalement par-dessus les rails, par-dessus les bords d'extrémités opposés au fond de goulotte, des rails (3),
- au moins deux pattes (12) de clipsage parallèles, dont une patte (12) s'étendant à partir de chaque extrémité de l'armature (8), sensiblement perpendiculaire à l'armature (8), chaque patte comportant un ergot de rétention (14) formant une protubérance en direction de l'ergot (14) de l'autre patte (12),
- au moins une languette (13) de maintien s'étendant en position assemblée du dispositif, de l'armature (8) vers le fond de goulotte (6),
**caractérisé en ce que** l'armature transversale (8) comprend deux barres transversales (9) reliant chacune les deux pattes de clipsage (12), les deux barres étant reliées entre elles par au moins deux barreaux disjoints l'un de l'autre, dont un barreau (10) d'attache et un barreau de renfort (11), le barreau de renfort (11) se trouvant à côté du barreau d'attache le long des barres transversales (9).

2. Dispositif selon la revendication 1, le barreau d'attache présentant un premier profil selon sa direction longitudinale (*̅x̅*̅) qui est concave, la concavité du premier profil (15) étant tournée vers le fond de goulotte (6) en position de montage, et le barreau de renfort (11), se trouvant à une hauteur (h₂) par rapport au fond de goulotte (18) strictement inférieure à la hauteur maximale (h₁) du premier profil concave (15).

3. Dispositif de maintien selon les revendications 1 ou 2, dans lequel le barreau de renfort (11) est rectiligne.

4. Dispositif de maintien selon l'une des revendications précédentes, dans lequel le barreau d'attache (10), présente suivant la direction longitudinale (*̅x̅*̅) un premier profil (15) sur une face inférieure, qui est concave, la concavité du premier profil (15) étant tournée vers le chemin de câble (6) en position de montage, et dans lequel le barreau d'attache présente suivant la direction transversale (*̅y̅*̅) un second profil (16) sur une face supérieure, qui est concave, la concavité du second profil (16) étant tournée à l'opposée du chemin de câbles (2) en position de montage.

5. Dispositif de maintien selon l'une des revendications précédentes, dans lequel le barreau d'attache (10) présente une ligne moyenne longitudinale (21) qui est une ligne brisée en trois segments de droites, dont deux segments formant un angle compris entre 30° et 60° par rapport au plan (*x̅ y̅*) défini par les deux lignes moyennes des deux barres transversales (9).

6. Dispositif de maintien selon l'une des revendications précédentes, dans lequel les deux barres (9) de l'armature transversale sont reliées uniquement par une succession de barreaux (10, 11), et par les deux pattes de clipsage (12).

7. Dispositif de maintien selon l'une des revendications précédentes, dans lequel au moins un ergot (14) interfère selon la direction transversale ( *̅y̅*̅ ) avec au moins un barreau (10, 11).

8. Dispositif de maintien selon l'une des revendications précédentes, dans lequel les deux barres (9) sont reliées par une succession de barreaux (10, 11), un barreau d'attache (10) alternant avec un barreau de renfort (11).

9. Dispositif de maintien selon l'une des revendications précédentes, comportant un nombre pair de languettes de maintien (13), s'étendant de part et d'autre de l'armature (8) transversale,avec des paires de languettes de même largeur se faisant face de part et d'autre de l'armature.

10. Dispositif de maintien selon l'une des revendications précédentes, dans lequel les barreaux d'attache (10) sont sensiblement perpendiculaires aux barres transversales (9), sont de largeur inférieure ou égale à la largeur des languettes de maintien (13), et sont chacun sensiblement centré par rapport à une languette de maintien (13).

11. Dispositif de maintien selon les revendications 8 et 10 combinées, comportant un nombre 4n multiple de quatre de languettes de maintien (13), et dans lequel le nombre de barreaux d'attache (10) est égal à n.

12. Dispositif de maintien selon l'une des revendications précédentes, dans lequel chaque patte de clipsage (12) comprend un arceau, une première extrémité de l'arceau étant solidaire d'une extrémité d'une première barre transversale (9), une seconde extrémité de l'arceau étant solidaire d'une extrémité d'une seconde barre transversale (9), et une portion de sommet de l'arceau portant latéralement l'ergot (14) de rétention, qui fait saillie en direction de l'autre ergot (14).

13. Procédé de fabrication par injection thermoplastique d'un dispositif de maintien pour chemin de câble, dans lequel on utilise un moule d'injection formé d'une partie fixe et d'une partie mobile, chaque partie fixe ou mobile portant une empreinte définissant au moins une face de chacun des éléments suivants :
- deux barres transversales parallèles (9),
- des barreaux (10, 11) reliant les deux barres transversales (9) à différentes hauteurs par rapport à un plan défini par les deux barres transversales,
- des languettes (13) s'étendant de part et d'autre des deux barres transversales,
- deux pattes de clipsage reliant chacune l'extrémité d'une barre transversale à l'extrémité voisine de l'autre barre transversale,
une des parties du moule étant munie de deux tiroirs (25a, 25b) coulissant suivant une direction (24) sensiblement parallèle aux barres transversales, et chaque tiroir étant apte à dépasser hors de cette partie de moule au travers d'une zone intérieure à l'empreinte d'une des pattes.

## Patentansprüche

1. Haltevorrichtung (1), die geeignet ist, über eine Kabelpritsche (2) mit einer oder mehreren parallelen flachen Schienen (3) geclipst zu werden, wobei die Kabelpritsche (2) von zwei parallelen flachen Seitenflächen (7) eingefasst ist, die zwei seitliche Schienen begrenzen und von einem Rinnenboden (6) eingefasst sind, der die Schienen (3) und die flachen Flächen senkrecht auf diese verbindet, wobei die Haltevorrichtung umfasst:
- einen Querbeschlag (8), der geeignet ist, quer über den Schienen, über den dem Rinnenboden gegenüberliegenden Endrändern der Schienen (3) angeordnet zu werden,
- mindestens zwei parallele Clipelemente (12), wobei sich ein Clip (12) von jedem Ende des Beschlags (8) im Wesentlichen senkrecht auf den Beschlag (8) erstreckt, wobei jeder Clip einen Haltehaken (14) umfasst, der einen Vorsprung in Richtung des Hakens (14) des anderen Clips (12) bildet,
- mindestens eine Haltelasche (13), die sich in zusammengebauter Position der Vorrichtung vom Beschlag (8) zum Rinnenboden (6) erstreckt, **dadurch gekennzeichnet, dass** der Querbeschlag (8) zwei Querstäbe (9) umfasst, die jeweils die beiden Clipelemente (12) verbinden, wobei die beiden Stäbe miteinander durch mindestens zwei voneinander getrennte Stangen verbunden sind, eine Befestigungsstange (10) und eine Verstärkungsstange (11), wobei sich die Verstärkungsstange (11) auf der Seite der Befestigungsstange entlang der Querstäbe (9) befindet.

2. Vorrichtung nach Anspruch 1, wobei die Befestigungsstange ein erstes Profil in ihre Längsrichtung (*̅x̅*̅) aufweist, das konkav ist, wobei die Konkavität des ersten Profils (15) zum Rinnenboden (6) in Montageposition gerichtet ist, und wobei sich die Verstärkungsstange (11) auf einer Höhe (h₂) zum Rinnenboden (18) befindet, die unbedingt geringer als die maximale Höhe (h₁) des ersten konkaven Profils (15) ist.

3. Haltevorrichtung nach den Ansprüchen 1 oder 2, bei der die Verstärkungsstange (11) gerade ist.

4. Haltevorrichtung nach einem der vorhergehenden Ansprüche, bei der die Befestigungsstange (10) entlang der Längsrichtung (*̅x̅*̅) ein erstes Profil (15) auf einer Unterseite aufweist, das konkav ist, wobei die Konkavität des ersten Profils (15) zum Rinnenboden (6) in Montageposition gewandt ist, und bei der die Befestigungsstange entlang der Querrichtung (*̅y̅*̅) ein zweites Profil (16) auf einer Oberseite aufweist, das konkav ist, wobei die Konkavität des zweiten Profils (16) entgegengesetzt zur Kabelpritsche (2) in Montageposition gewandt ist.

5. Haltevorrichtung nach einem der vorhergehenden Ansprüche, bei der die Befestigungsstange (10) eine Längsmittellinie (21) aufweist, die eine in drei Geradensegmente unterteilte Linie ist, von der zwei Segmente einen Winkel zwischen 30° und 60° zur Ebene (*x̅ y̅*) bilden, die von den beiden Mittellinien der beiden Querbalken (9) definiert ist.

6. Haltevorrichtung nach einem der vorhergehenden Ansprüche, bei der die beiden Stäbe (9) des Querbeschlags nur durch eine Aufeinanderfolge von Stangen (10, 11) und durch die beiden Clipelemente (12) verbunden sind.

7. Haltevorrichtung nach einem der vorhergehenden Ansprüche, bei der mindestens ein Haken (14) in Querrichtung (*̅y̅*̅) mit mindestens einer Stange (10, 11) interferiert.

8. Haltevorrichtung nach einem der vorhergehenden Ansprüche, bei der die beiden Stäbe (9) durch eine Aufeinanderfolge von Stangen (10, 11) verbunden sind, wobei eine Befestigungsstange (10) mit einer Verstärkungsstange (11) abwechselt.

9. Haltevorrichtung nach einem der vorhergehenden Ansprüche, umfassend eine gerade Anzahl von Haltelaschen (13), die sich beiderseits des Querbeschlags (8) erstrecken, wobei Laschenpaare derselben Breite einander beiderseits des Beschlags gegenüberliegen.

10. Haltevorrichtung nach einem der vorhergehenden Ansprüche, bei der die Befestigungsstangen (10) im Wesentlichen auf die Querstäbe (9) senkrecht sind, eine Breite kleiner oder gleich der Breite der Haltelaschen (13) aufweisen und jeweils im Wesentlichen in Bezug zu einer Haltelasche (13) zentriert sind.

11. Haltevorrichtung nach den Ansprüchen 8 und 10 in Kombination, umfassend eine Anzahl des 4n-Vielfachen von vier Haltelaschen (13), wobei die Anzahl von Befestigungsstangen (10) gleich n ist.

12. Haltevorrichtung nach einem der vorhergehenden Ansprüche, bei der jedes Clipelement (12) einen Bogen umfasst, wobei ein erstes Ende des Bogens mit einem Ende eines ersten Querstabs (9) verbunden ist, wobei ein zweites Ende des Bogens mit einem Ende eines zweiten Querstabs (9) verbunden ist, und wobei ein Spitzenabschnitt des Bogens seitlich den Haltehaken (14) trägt, der in Richtung des anderen Hakens (14) vorspringt.

13. Verfahren zur Herstellung einer Haltevorrichtung für eine Kabelpritsche durch Thermoplastspritzguss, bei dem eine Spritzgussform, die von einem festen Teil und einem beweglichen Teil gebildet ist, verwendet wird, wobei jeder feste oder bewegliche Teil einen Abdruck trägt, der mindestens eine Seite jedes der folgenden Elemente definiert:
- zwei parallele Querstäbe (9),
- Stangen (10, 11), die die beiden Querstäbe (9) auf verschiedenen Höhen in Bezug zu einer durch die Querstäbe definierten Ebene verbindet,
- Laschen (13), die sich beiderseits der beiden Querstäbe erstrecken,
- zwei Clipelemente, die jeweils das Ende eines Querstabes mit dem benachbarten Ende des anderen Querstabes verbinden,
wobei einer der Teile der Form mit zwei Gleitschiebern (25a, 25b) in eine Richtung (24) im Wesentlichen parallel zu den Querstäben versehen ist, wobei jeder Schieber geeignet ist, über diesen Teil der Form durch eine Innenzone des Abdrucks eines der Clips hinauszuragen.

## Claims

1. Holding device (1) able to be snap-fitted over a cable trough (2) to one or more parallel planar rails (3), the cable trough (2) being bounded by two parallel planar lateral faces (7) delimiting two lateral rails, and being bounded by a throat bottom (6) connecting the rails (3) and connecting the planar faces perpendicular to the latter, the holding device comprising:
- a transverse frame (8) able to be arranged transversely over the rails, over the edges of those ends of the rails (3) which are distant from the throat bottom,
- at least two parallel snap-fitting tabs (12), of which one tab (12) extends from each end of the frame (8), substantially perpendicular to the frame (8), each tab comprising a retaining spur (14) forming a protuberance in the direction of the spur (14) of the other tab (12),
- at least one holding tongue (13) extending, when the device is in the assembled position, from the frame (8) towards the throat bottom (6),
**characterized in that** the transverse frame (8) comprises two transverse bars (9), each connecting the two snap-fitting tabs (12), the two bars being connected to one another by at least two separate stanchions, specifically one attachment stanchion (10) and one reinforcing stanchion (11), the reinforcing stanchion (11) being located next to the attachment stanchion along the transverse bars (9).

2. Device according to Claim 1, the attachment stanchion having a first profile, along its longitudinal direction (x), which is concave, the concavity of the first profile (15) being oriented towards the throat bottom (6) in the mounted position, and the reinforcing stanchion (11) being located at a height (h₂), with respect to the throat bottom (18), which is strictly less than the maximum height (h₁) of the first concave profile (15).

3. Holding device according to Claim 1 or 2, in which the reinforcing stanchion (11) is straight.

4. Holding device according to one of the preceding claims, in which the attachment stanchion (10) has, in the longitudinal direction (*̅x̅*̅), a first profile (15) on a lower face, which is concave, the concavity of the first profile (15) being oriented towards the throat bottom (6) in the mounted position, and in which the attachment stanchion has, in the transverse direction (*̅y̅*̅, a second profile (16) on an upper face, which is concave, the concavity of the second profile (16) being oriented away from the cable trough (2) in the mounted position.

5. Holding device according to one of the preceding claims, in which the attachment stanchion (10) has a longitudinal centre line (21) which is a line broken into three straight segments, two of which segments forming an angle between 30° and 60° with respect to the plane (*x̅ y̅*) defined by the two centre lines of the two transverse bars (9).

6. Holding device according to one of the preceding claims, in which the two bars (9) of the transverse frame are connected solely by a succession of stanchions (10, 11) and by the two snap-fitting tabs (12) .

7. Holding device according to one of the preceding claims, in which at least one spur (14) engages in the transverse direction (*̅y̅*̅) with at least one stanchion (10, 11).

8. Holding device according to one of the preceding claims, in which the two bars (9) are connected by a succession of stanchions (10, 11), wherein an attachment stanchion (10) alternates with a reinforcing stanchion (11).

9. Holding device according to one of the preceding claims, comprising an even number of holding tongues (13) extending on either side of the transverse frame (8), with pairs of tongues of the same width being located opposite each other on either side of the frame.

10. Holding device according to one of the preceding claims, in which the attachment stanchions (10) are substantially perpendicular to the transverse bars (9), their width is less than or equal to the width of the holding tongues (13), and they are each substantially centred with respect to a holding tongue (13).

11. Holding device according to Claims 8 and 10 in combination, comprising a number 4n, being a multiple of four, of holding tongues (13), and in which the number of attachment stanchions (10) is equal to n.

12. Holding device according to one of the preceding claims, in which each snap-fitting tab (12) comprises a shackle, a first end of the shackle being secured to an end of a first transverse bar (9), a second end of the shackle being secured to an end of a second transverse bar (9), and a portion of the crest of the shackle bearing, laterally, the retaining spur (14) which projects towards the other spur (14).

13. Method for manufacturing, by thermoplastic injection, a holding device for a cable trough, in which use is made of an injection mould formed of a fixed part and a movable part, each fixed or movable part bearing an imprint defining at least one face of each of the following elements:
- two parallel transverse bars (9),
- stanchions (10, 11) connecting the two transverse bars (9) at different heights with respect to a plane defined by the two transverse bars,
- tongues (13) extending on either side of the two transverse bars,
- two snap-fitting tabs, each connecting the end of one transverse bar to the adjacent end of the other transverse bar,
one of the parts of the mould being provided with two drawers (25a, 25b) which slide in a direction (24) substantially parallel to the transverse bars, and each drawer being able to project out from this mould part through a zone inside the imprint of one of the tabs.
